(19) **Europäisches Patentamt European Patent Office Office européen des brevets**

(11) **EP 3 624 397 B1**

(12) **EUROPEAN PATENT SPECIFICATION**

(45) Date of publication and mention
of the grant of the patent:
**20.07.2022 Bulletin 2022/29**

(21) Application number: **17921697.3**

(22) Date of filing: **08.12.2017**

(51) International Patent Classification (IPC):
**H04W 40/24** (2009.01)     **G01C 21/32** (2006.01)
**H04L 67/52** (2022.01)

(52) Cooperative Patent Classification (CPC):
**H04W 40/248; H04L 67/52;** G01S 5/0072;
G01S 5/12; G01S 19/42; G01S 19/51; H04L 41/12

(86) International application number:
**PCT/CN2017/115265**

(87) International publication number:
**WO 2019/033634 (21.02.2019 Gazette 2019/08)**

(54) **NODE PROCESSING**

KNOTENVERARBEITUNG

TRAITEMENT DE NOEUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.08.2017 CN 201710693381**

(43) Date of publication of application:
**18.03.2020 Bulletin 2020/12**

(73) Proprietor: **Beijing Sankuai Online Technology
Co., Ltd
Beijing 100080 (CN)**

(72) Inventors:
• **YIN, Feifan
Beijing 100080 (CN)**
• **XUE, Zhangying
Beijing 100080 (CN)**

(74) Representative: **Manitz Finsterwald
Patent- und Rechtsanwaltspartnerschaft mbB
Martin-Greif-Strasse 1
80336 München (DE)**

(56) References cited:
WO-A1-2014/120161     CN-A- 101 901 551
CN-A- 103 500 516     CN-A- 106 355 927
CN-A- 106 355 927     CN-A- 106 899 306
CN-B- 101 400 138     CN-B- 103 500 516

## Description

## TECHNICAL FIELD

The present invention relates to node processing technologies.

## BACKGROUND

In various position-based services including service area dividing, personnel position information reporting, and the like, to save a storage space and reduce an amount of information transmitted through a network, a node may be processed based on a single dimension such as an angle or a distance to compress a boundary of a service area, personnel track information, and the like. For example, if a distance between a plurality of nodes is less than a specific threshold, the nodes are processed as one node, and a geometric center corresponding to all nodes before the processing is used as a position of the node obtained after the processing. The features of the preamble of the independent claims are known from CN 106 355 927 A, which discloses a GPS mark point determining method and a GPS trajectory optimization method and device. Further, CN 103 500 516 B discloses a high-efficiency trace replay method and system based on electronic map.

## SUMMARY

In view of the foregoing problem in the background, the invention provides a node processing method and apparatus, an electronic device, and a computer storage medium, to resolve or partially resolve the foregoing problem, as set out in the appended claims.

According to a first aspect of the embodiments of the invention, a node processing method is provided, and the method includes: obtaining node data of a plurality of nodes; calculating an angle parameter between a first node and neighboring nodes and a distance parameter between the first node and the neighboring nodes, the first node being any of the plurality of nodes; determining an information amount of the first node based on the angle parameter and the distance parameter; and performing node deletion processing on the plurality of nodes based on the information amount.

According to a second aspect of the embodiments of the invention, a node processing apparatus is provided, and the apparatus includes: an obtaining unit configured to obtain node data of a plurality of nodes; a calculation processing unit configured to calculate an angle parameter between a first node and neighboring nodes and a distance parameter between the first node and the neighboring nodes based on the node data and determine an information amount of the first node based on the angle parameter and the distance parameter, the first node being any of the plurality of nodes; and a compression processing unit configured to perform node deletion processing on the plurality of nodes based on the information amount.

According to a third aspect of the embodiments of the invention, a computer readable storage medium storing computer instructions is provided. The instructions are executed by a processor to implement the steps of the method in the embodiments of the present invention.

According to a fourth aspect of the embodiments of the invention, an electronic device is provided, including a memory, a processor, and a computer program stored on the memory and executable on the processor. The processor implements the steps of the method in the first aspect when executing the program.

An information amount corresponding to each node is determined based on an angle parameter and a distance parameter, and a node with a relatively small information amount can be removed, to properly reserve a critical node when a non-critical node is deleted to save a storage space, thereby further effectively improving accuracy of node processing.

## BRIEF DESCRIPTION OF THE DRAWINGS

FIG. 1 is a schematic flowchart of a node processing method according to an embodiment of the present invention.
FIG. 2 is a schematic flowchart of a node processing method according to another embodiment of the present invention.
FIG. 3 is a schematic flowchart of a node processing method according to still another embodiment of the present invention.
FIG. 4 is a schematic flowchart of a node processing method according to still another embodiment of the present invention.
FIG. 5a to FIG. 5f are respectively schematic diagrams of application of a node processing method according to an embodiment of the present invention.
FIG. 6 is a schematic diagram of a composition structure of a node processing apparatus according to an embodiment of the present invention.
FIG. 7 is a schematic structural diagram of hardware of an electronic device according to an embodiment of the present invention.

## DETAILED DESCRIPTION OF THE EMBODIMENTS

The following further describes embodiments of the present invention in detail in combination with the accompanying drawings and specific embodiments.

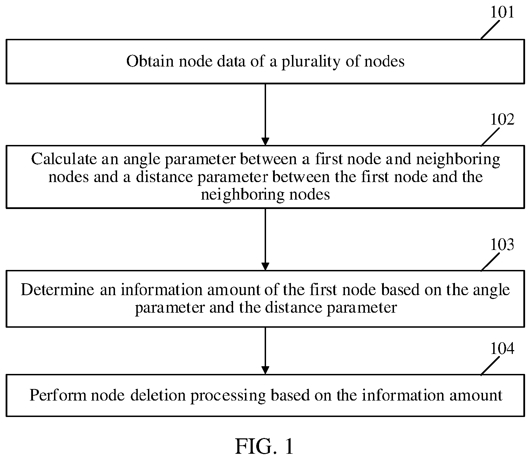

FIG. 1 is a schematic flowchart of a node processing method according to an embodiment of the present invention. As shown in FIG. 1, the method includes the following steps:

Step 101: Node data of a plurality of nodes is obtained.

Step 102: An angle parameter between a first node and neighboring nodes and a distance parameter between the first node and the neighboring nodes are calculated, the first node being any of the plurality of nodes.

Step 103: An information amount of the first node is determined based on the angle parameter and the distance parameter.

Step 104: Node deletion processing is performed based on the information amount.

The node processing method in this embodiment may be applied to a mobile terminal, for example, a terminal that supports running of a position-based application, such as a mobile phone, a tablet computer, or a smart band; or may be applied to a server to which a position-based application belongs. The obtaining data of a plurality of nodes in step 101 may specifically include: obtaining, through mobile positioning, the data of the plurality of nodes that indicates a position, where the mobile positioning includes but is not limited to positioning such as a global positioning system (GPS) or an auxiliary GPS (A-GPS); or receiving the data of the plurality of nodes that indicates a position and that is sent by the mobile terminal. The node data includes node information and corresponding position information. The node information may be indicated by a node identifier. The position information may be indicated by longitude, latitude, and the like.

During movement of the mobile terminal, at least some of the obtained data of the plurality of nodes may belong to one path. When the node processing method is applied to a server, a server may obtain data of nodes that belongs to different mobile terminals. The server identifies data of a plurality of nodes that belongs to one mobile terminal and determines at least some of the data of the plurality of nodes that belongs to the mobile terminal as node data on one path. Data of a plurality of nodes that meets a continuous moving state may belong to one path. For example, if continuously obtained node data is changing node data, the continuously obtained changing node data is used as data of a plurality of nodes that meets one path. Continuously obtaining non-changing node data may indicate that a position of the mobile terminal does not change. In this case, the continuously changing node data that is previously obtained may belong to one path, and continuously changing node data that is to be obtained subsequently belongs to another path.

The calculating an angle parameter between a first node and neighboring nodes in step 102 includes: determining an included angle formed by the first node and a previous neighboring node and a next neighboring node, and calculating an absolute value obtained after 180 degrees are subtracted from the included angle; and using the absolute value as the angle parameter between the first node and the neighboring nodes.

After the plurality of nodes is determined, the plurality of nodes may be connected according to a sequence of time parameters for obtaining the node data. Any two neighboring nodes are connected by a straight line. In this case, a parameter of an angle formed by any node and neighboring nodes may be calculated. For example, for the $N^{th}$ node in the plurality of nodes, where N is a positive integer greater than 1, the $(N-1)^{th}$ node and the Nth node, and the $N^{th}$ node and the $(N+1)^{th}$ node are respectively connected by straight lines. In this case, a formed minimum included angle is indicated by V, and an angle parameter between the $N^{th}$ node and the neighboring nodes is indicated by $|V-180|$.

The calculating a distance parameter between the first node and the neighboring nodes in step 102 includes: determining a first distance between the first node and a previous neighboring node, and determining a second distance between the first node and a next neighboring node; and determining the distance parameter between the first node and the neighboring nodes based on the first distance and the second distance.

The determining the distance parameter between the first node and the neighboring nodes based on the first distance and the second distance may include: comparing the first distance and the second distance to determine a larger value in the first distance and the second distance; and determining the distance parameter based on the larger value.

In this case, the determining an information amount of the first node based on the angle parameter and the distance parameter in step 103 may include: obtaining a product of the angle parameter and the distance parameter, and determining the information amount based on the product. For example, the information amount may be expressed as follows:

$$entropy = angle \times \max(dist1, dist2) \quad (1)$$

In the formula, the entropy represents the information amount; the angle represents the angle parameter, and it may be understood that the angle is equal to $|V-180|$; the dist1 represents the first distance; and the dist2 represents the second distance.

In addition, the determining the distance parameter between the first node and the neighboring nodes based on the first distance and the second distance may include: obtaining a sum of the first distance and the second distance; and determining the distance parameter based on the sum.

In this case, the determining an information amount of the first node based on the angle parameter and the distance parameter in step 103 may include: obtaining a product of the angle parameter and the distance parameter, and determining the information amount based on the product. For example, the information amount may be specifically expressed as follows:

$$entropy = angle \times (dist1 + dist2) \quad (2)$$

In the formula, the entropy represents the information amount; the angle represents the angle parameter, and it may be understood that the angle is equal to |V-180|; the dist1 represents the first distance; and the dist2 represents the second distance.

It can be learned that the information amount may indicate an amount of information provided by the first node in a polygon. The polygon may be a polygon formed by the plurality of nodes corresponding to the data of the plurality of nodes. Each node is a vertex in the polygon. The performing node deletion processing based on the information amount in step 104 may include: deleting node data with a relatively small information amount in the data of the plurality of nodes, and reserving node data with a relatively large information amount.

Still further, the performing node deletion processing based on the information amount in step 104 may include: when a preset condition is met, deleting a second node with a minimum information amount, and re-determining an information amount of a neighboring node of the second node. Assuming that the deleted second node is the Nth node, information amounts of the $(N-1)^{th}$ node and the $(N+1)^{th}$ node are re-determined. An angle parameter and a distance parameter of the $(N-1)^{th}$ node need to be re-determined based on the $(N-2)^{th}$ node and the $(N+1)^{th}$ node. Correspondingly, an angle parameter and a distance parameter of the $(N+1)^{th}$ node need to be re-determined based on the $(N-1)^{th}$ node and the $(N+2)^{th}$ node. For a determining manner, refer to the technical solution described above. Details are not described herein again.

An information amount corresponding to each node is determined based on an angle parameter and a distance parameter, and a node with a relatively small information amount can be removed, to properly reserve a critical node when a non-critical node is deleted to save a storage space, thereby further effectively improving accuracy of node processing.

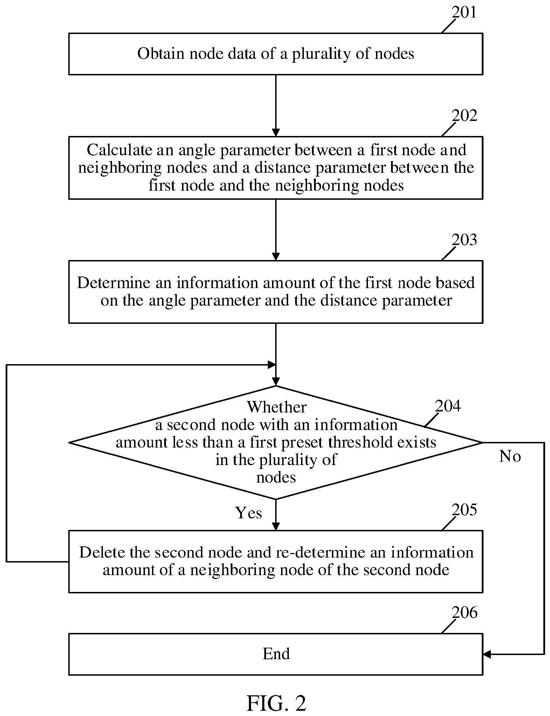

FIG. 2 is a schematic flowchart of a node processing method according to another embodiment of the present invention. As shown in FIG. 2, the method includes the following steps:

Step 201: Node data of a plurality of nodes is obtained.
Step 202: An angle parameter between a first node and neighboring nodes and a distance parameter between the first node and the neighboring nodes are calculated, the first node being any of the plurality of nodes.
Step 203: An information amount of the first node is determined based on the angle parameter and the distance parameter.
Step 204: It is determined whether a second node with an information amount less than a first preset threshold exists in the plurality of nodes, and step 205 is performed when the second node with the information amount less than the first preset threshold exists; or step 206 is performed when the second node with the information amount less than the first preset threshold does not exist, which indicates that an information amount of any of the plurality of nodes is greater than or equal to the first preset threshold.
Step 205: The second node is deleted, and step 204 is performed again after an information amount of a neighboring node of the second node is re-determined.
Step 206: The current node processing process is ended.

For steps 201, 202, and 203, refer to the description of steps 101, 102, and 103. Details are not described herein again.

In step 204, it is determined whether the second node with the information amount less than the first preset threshold exists in the plurality of nodes. When the second node with the information amount less than the first preset threshold exists, step 205 is performed to delete the second node, and the information amount of the neighboring node of the second node is re-determined. For example, if the deleted second node is the Nth node, information amounts the $(N-1)^{th}$ node and the $(N+1)^{th}$ node are re-calculated. Because neighboring nodes of the $(N-1)^{th}$ node are the $(N-2)^{th}$ node and the $(N+1)^{th}$ node, a first angle parameter between the $(N-1)^{th}$ node and both the $(N-2)^{th}$ node and the $(N+1)^{th}$ node and a first distance parameter between the $(N-1)^{th}$ node and both the $(N-2)^{th}$ node and the $(N+1)^{th}$ node are calculated. In addition, the information amount of the $(N-1)^{th}$ node is re-determined based on the first angle parameter and the first distance parameter. Correspondingly, because neighboring nodes of the $(N+1)^{th}$ node are the $(N-1)^{th}$ node and the $(N+2)^{th}$ node, a second angle parameter between the $(N+1)^{th}$ node and both the $(N-1)^{th}$ node and the $(N+2)^{th}$ node and a second distance parameter between the $(N+1)^{th}$ node and both the $(N-1)^{th}$ node and the $(N+2)^{th}$ node are calculated. In addition, the information amount of the $(N+1)^{th}$ node is re-determined based on the second angle parameter and the second distance parameter.

Further, in step 204, it is re-determined whether an information amount of any of a plurality of remaining nodes is less than the first preset threshold. The foregoing operation is repeated until information amounts of all nodes are greater than or equal to the first preset threshold, and the current node processing process is ended. In practical application, after an information amount of each of the plurality of nodes is calculated, it is determined whether the information amount of each node is less than the first preset threshold; or after an information amount of any node is calculated, it is determined whether the information amount is less than the first preset threshold, that is, it is determined one by one whether an information amount of a node is less than the first preset threshold.

According to the technical solution in this embodiment of the present invention, an information amount corresponding to each node is determined based on an angle parameter and a distance parameter, and a node with a relatively small information amount is removed, to properly reserve a critical node when a non-critical node is deleted to save a storage space, thereby effectively improving accuracy of node processing.

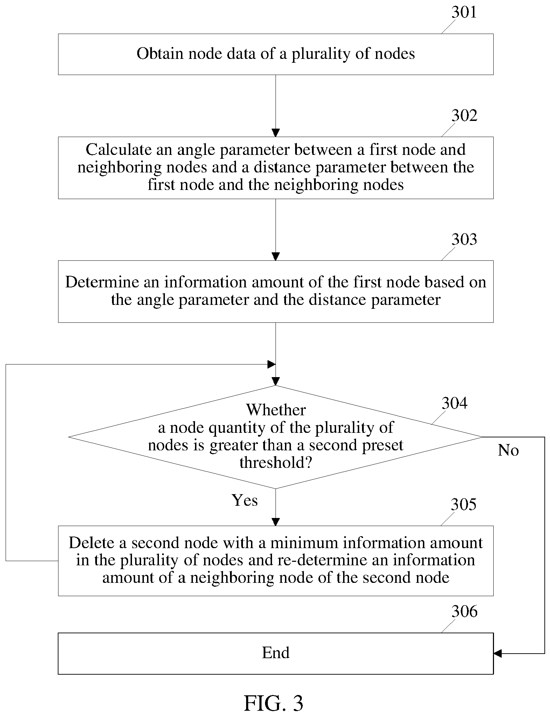

FIG. 3 is a schematic flowchart of a node processing method according to still another embodiment of the present invention. As shown in FIG. 3, the method includes the following steps:

Step 301: Node data of a plurality of nodes is obtained.

Step 302: An angle parameter between a first node and neighboring nodes and a distance parameter between the first node and the neighboring nodes are calculated, the first node being any of the plurality of nodes.

Step 303: An information amount of the first node is determined based on the angle parameter and the distance parameter.

Step 304: It is determined whether a node quantity of the plurality of nodes is greater than a second preset threshold, and step 305 is performed when the node quantity of the plurality of nodes is greater than the second preset threshold; or step 306 is performed when the node quantity of the plurality of nodes is not greater than the second preset threshold.

Step 305: A second node with a minimum information amount is deleted, and step 304 is performed again after an information amount of a neighboring node of the second node is re-determined.

Step 306: The current node processing process is ended.

Step 301 to step 303 may respectively correspond to step 101 to step 103 in the foregoing embodiment. For brevity, details are not described herein again.

When step 304 is performed for the first time, it is determined whether the node quantity of the plurality of nodes is greater than the second preset threshold. When the quantity of the plurality of nodes is greater than the second preset threshold, step 305 is performed to delete the second node with the minimum information amount, and the information amount of the neighboring node of the deleted second node is re-determined. For specific content of step 305, refer to the description of step 205. Details are not described herein again.

Further, in step 304, it is further determined whether a node quantity (the node quantity may be referred to as a quantity of remaining nodes) of a plurality of nodes after the second node with the minimum information amount is deleted is greater than the second preset threshold. When the quantity of remaining nodes after the second node is deleted is still greater than the second preset threshold, step 305 continues to be performed to further delete a second node with a minimum information amount in the remaining nodes, and an information amount of a neighboring node of the deleted second node is re-determined. The foregoing operation is repeated until a node quantity (the node quantity may be referred to as a quantity of remaining nodes) of a plurality of nodes is not greater than (that is, less than or equal to) the second preset threshold, and the node processing process is ended.

In the foregoing process, when it is determined that the node quantity is greater than the second preset threshold, the plurality of nodes needs to be sorted based on a value of an information amount to obtain the second node with the minimum information amount. The plurality of nodes may be sorted based on the value of the information amount at any time point before step 305 and after step 303.

According to the technical solution this embodiment of the present invention, an information amount corresponding to each node is determined based on an angle parameter and a distance parameter, and a node with a relatively small information amount is removed step by step, to properly reserve a critical node when a non-critical node is deleted to save a storage space, thereby effectively improving accuracy of node processing. In addition, a quantity of remaining nodes after the deletion processing is set, and the quantity of remaining nodes can be expected, to ensure that the nodes after the processing are a preset quantity of nodes with relatively large information amounts, and a storage capacity requirement for a storage space can be met to some degree.

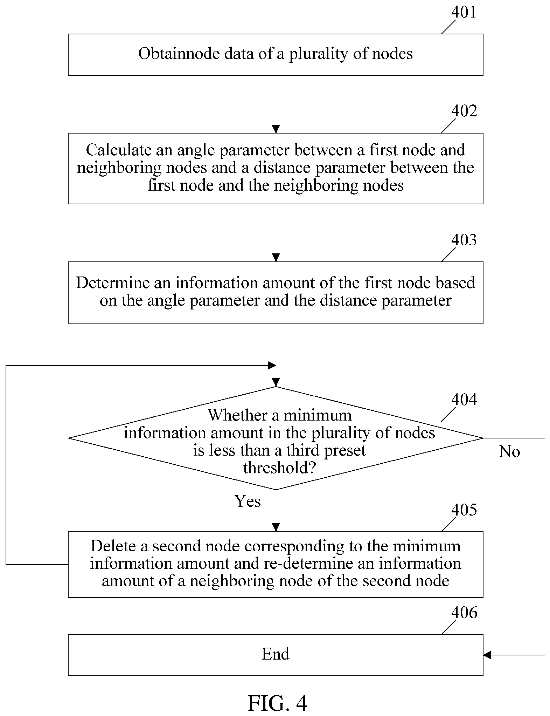

FIG. 4 is a schematic flowchart of a node processing method according to still another embodiment of the present invention. As shown in FIG. 4, the method includes the following steps:

Step 401: Node data of a plurality of nodes is obtained.

Step 402: An angle parameter between a first node and neighboring nodes and a distance parameter between the first node and the neighboring nodes are calculated, the first node being any of the plurality of nodes.

Step 403: An information amount of the first node is determined based on the angle parameter and the distance parameter.

Step 404: It is determined whether a minimum information amount in the plurality of nodes is less than a third preset threshold, and step 405 is performed when the minimum information amount is less than the third preset threshold; or step 406 is performed when the minimum information amount is greater than or equal to the third preset threshold.

Step 405: A second node with a minimum information amount is deleted, and step 404 is performed again after an information amount of a neighboring node of the second node is re-determined.

Step 406: The current node processing process is ended.

Step 401 to step 403 respectively correspond to step 101 to step 103 in the foregoing embodiment. For brevity, details are not described herein again.

In step 404, it is determined whether the minimum information amount in the plurality of nodes is less than the third preset threshold. When the minimum information amount is less than the third preset threshold, step 405 is performed to delete a node (denoted as the second node) with the minimum information amount, and the information amount of the neighboring node of the second node is further re-determined. For specific content of step 405, refer to the description of step 205. Details are not described herein again.

Further, in step 404, it is determined whether a minimum information amount in a plurality of remaining nodes after the second node is deleted is less than the third preset threshold. When the minimum information amount is still less than the third preset threshold, a second node corresponding to the minimum information amount is further deleted, and an information amount of a neighboring node of the second node is re-determined. The foregoing operation is repeated until information amounts of all nodes are greater than or equal to the third preset threshold, and the current node processing process is ended. In the foregoing process, before it is determined whether the minimum information amount in the plurality of nodes is less than the third preset threshold, the plurality of nodes needs to be sorted based on a value of an information amount to obtain the second node with the minimum information amount.

According to the technical solution in this embodiment of the present invention, an information amount corresponding to each node is determined based on an angle parameter and a distance parameter, and a node with a relatively small information amount is removed, to properly reserve a critical node when a non-critical node is deleted to save a storage space, thereby effectively improving accuracy of node processing.

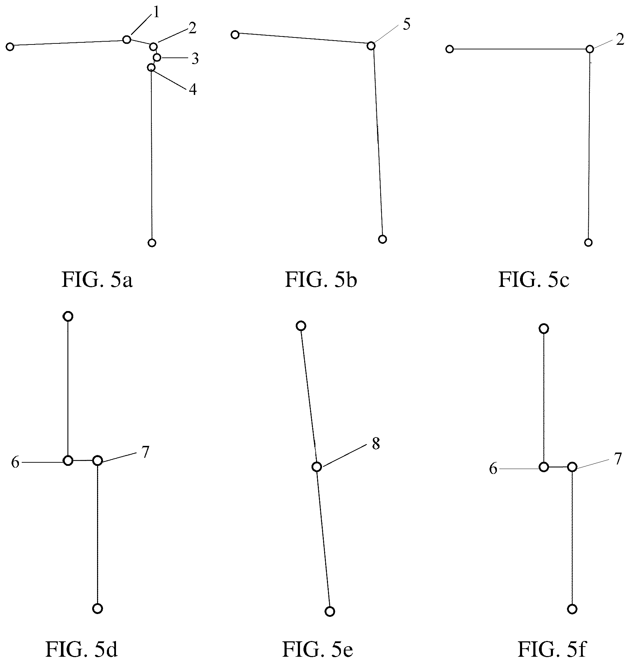

FIG. 5a to FIG. 5f are respectively schematic diagrams of application of a node processing method according to an embodiment of the present invention.

In an example, FIG. 5a is a schematic diagram before node processing. Nodes 1, 2, 3, and 4 are at corner positions. Because distances between the nodes 1, 2, 3, and 4 are less than a specific threshold, if the node processing is performed only based on a distance parameter, the nodes 1, 2, 3, and 4 may be combined into one node, that is, a node 5 in FIG. 5b. A position of the node 5 may be a geometric center of a polygon in which the nodes 1, 2, 3, and 4 are used as vertices. By contrast, if the node processing method in this embodiment of the present invention is used, to be specific, an information amount is calculated based on an angle parameter and a distance parameter between each node and neighboring nodes, because the nodes 1 and 4 have a relatively small angle parameter and the node 3 has a relatively small distance parameter, the nodes 1, 3, and 4 with relatively small information amounts (for example, less than the first preset threshold) may be deleted, and the critical node 2 with a relatively large information amount is reserved. Referring to FIG. 5b and FIG. 5c, according to the node processing method in this embodiment of the present invention, a node at a critical corner position in a track can be reserved in a relatively accurate manner, to greatly improve accuracy of node processing and accurately embody an area boundary or the track.

In another example, FIG. 5d is a schematic diagram before node processing. Nodes 6 and 7 are at corner positions. Because a distance between the nodes 6 and 7 is less than a specific threshold, if the node processing is performed only based on a distance parameter, the nodes 6 and 7 are combined into one node, that is, a node 8 in FIG. 5e. A position of the node 8 may be a midpoint of a line connecting the nodes 6 and 7. By contrast, if the node processing method in this embodiment of the present invention is used, information amounts are respectively calculated based on angle parameters and distance parameters of the nodes 6 and 7, because an angle parameter of the node 6 is approximate to an angle parameter of the node 7, and the distance parameters are relatively large, the information amounts respectively obtained through the calculation may be approximate but not small, and deletion processing is not performed on the nodes 6 and 7, to reserve the critical nodes 6 and 7 at the corner shown in FIG. 5f. Referring to FIG. 5e and FIG. 5f, in comparison with a straight line of the track presented after the processing, according to the node processing method in this embodiment of the present invention, a node at a critical corner position in a track can be reserved in a relatively accurate manner, to effectively improve accuracy of node processing and accurately embody an area boundary or the track.

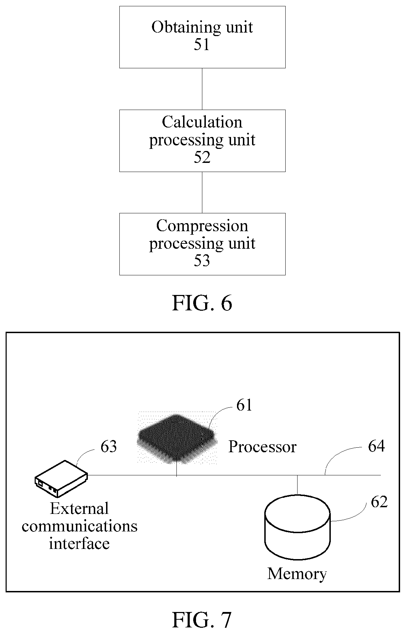

FIG. 6 is a schematic diagram of a composition structure of a node processing apparatus according to an embodiment of the present invention. As shown in FIG. 6, the apparatus includes: an obtaining unit 51, a calculation processing unit 52, and a compression processing unit 53.

The obtaining unit 51 is configured to obtain node data of a plurality of nodes.

The calculation processing unit 52 is configured to calculate an angle parameter between a first node and neighboring nodes and a distance parameter between the first node and the neighboring nodes, the first node being any of the plurality of nodes. In addition, the calculation processing unit 52 may be further configured to determine an information amount of the first node based on the angle parameter and the distance parameter.

The compression processing unit 53 is configured to perform node deletion processing based on the information amount determined by the calculation processing unit 52.

In an implementation, the compression processing unit 53 may be configured to delete a second node with an information amount less than a first preset threshold in the plurality of nodes. In this case, the calculation processing unit 52 may re-determine an information amount of a neighboring node of the second node.

In another implementation, the compression processing unit 53 may be configured to: when a preset condition is met, delete a second node with a minimum information amount in the plurality of nodes.

For example, the compression processing unit 53 may be configured to determine whether a node quantity of the plurality of nodes is greater than a second preset threshold. When the node quantity of the plurality of nodes is greater than the second preset threshold, the compression processing unit 53 determines that the preset condition is met and deletes the second node with the minimum information amount in the plurality of nodes.

For another example, the compression processing unit 53 may be configured to determine whether the minimum information amount in the plurality of nodes is less than a third preset threshold. When the minimum information amount is less than the third preset threshold, the compression processing unit 53 determines that the preset condition is met and deletes the second node corresponding to the minimum information amount in the plurality of nodes.

The calculation processing unit 52 is specifically configured to determine an included angle formed by the first node and both a previous neighboring node and a next neighboring node, calculate an absolute value obtained after 180 degrees are subtracted from the included angle, and use the absolute value as the angle parameter between the first node and the neighboring nodes.

The calculation processing unit 52 is further specifically configured to determine a first distance between the first node and a previous neighboring node, determine a second distance between the first node and a next neighboring node, and determine the distance parameter between the first node and the neighboring nodes based on the first distance and the second distance.

For example, the calculation processing unit 52 may compare the first distance and the second distance to determine a larger value in the first distance and the second distance, and determine the distance parameter based on the larger value.

For another example, the calculation processing unit 52 may obtain a sum of the first distance and the second distance and determine the distance parameter based on the sum.

The calculation processing unit 52 may be further specifically configured to obtain a product of the angle parameter and the distance parameter, and determine the information amount based on the product.

A person skilled in the art should understand that for functions of each processing unit in the node processing apparatus of this embodiment of the present invention, reference may be made to the related descriptions of the foregoing node processing method for understanding. Each processing unit in the node processing apparatus of this embodiment of the present invention may be implemented by implementing an analog circuit of the functions according to this embodiment of the present invention, or may be implemented by running of software of the functions according to this embodiment of the present invention on an intelligent terminal.

In practical applications, the node processing apparatus may be implemented by a mobile terminal or a server. In practical applications, the calculation processing unit 52 and the compression processing unit 53 in the node processing apparatus may both be implemented by a central processing unit (CPU), a digital signal processor (DSP), a microcontroller unit (MCU) or a field-programmable gate array (FPGA). In practical applications, the obtaining unit 51 in the apparatus may be implemented by a GPS or an A-GPS, or may be implemented by a communication module (including: a basic communication suite, an operating system, a communication module, a standardized interface, a protocol, and the like) and a transceiver antenna.

It should be noted that, when the node processing apparatus provided in the foregoing embodiment performs node compression, only divisions of the foregoing program modules are described by using an example. During actual application, the foregoing processing may be allocated to and completed by different program modules according to requirements, that is, the internal structure of the apparatus is divided into different program modules, to complete all or some of the foregoing described processing. In addition, the node processing apparatus provided by the foregoing embodiment belongs to a same conception as the node processing method in the foregoing embodiment. For a specific implementation process of the picture compression apparatus, refer to the method embodiment, and the details are not described herein again.

FIG. 7 is a schematic structural diagram of hardware of an electronic device according to an embodiment of the present invention. As shown in FIG. 7, the electronic device may include a memory 62, a processor 61, and a computer program stored on the memory 62 and executable on the processor 61. In practical applications, the electronic device may further include an external communication interface 63, and the processor 61, the memory 62, and the external communication interface 63 are all connected through a bus 64. It may be understood that, the bus 64 is configured to implement connection and communication between the components. In addition to a data bus, the bus 64 further includes a power bus, a control bus, and a state signal bus. However, for the clarity of description, various buses are marked as the bus 64 in FIG. 7. As an implementation, the external communication interface 63 may include a communication module configured for positioning, for example, a GPS antenna. The external communication interface 63 is configured to implement a function of the obtaining unit 51 shown in FIG. 6 to obtain node data of a plurality of nodes representing a position.

Referring to FIG. 6 and FIG. 7, the calculation processing unit 52 and the compression processing unit 53 shown in FIG. 6 may be implemented by the processor 61 shown in FIG. 7 in actual applications, and the functions of the calculation processing unit 52 and the compression processing unit 53 implemented by the processor 61 may be implemented by executing the computer program stored in the memory 62.

It may be understood that, the memory 62 may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic memory, a compact disc, or a compact disc read-only memory (CD-ROM). The magnetic memory may be a magnetic disk memory or a magnetic tape memory. The volatile memory may be a random access memory (RAM), used as an external cache. By way of examples but of no limitation, many forms of RAM are available, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory 62 in this embodiment of the present invention is intended to include but not limited to these memories and memories of any other suitable types.

The memory 62 in this embodiment of the present invention is configured to store various types of data to support operation of the node processing apparatus. Examples of such data include: any computer program for operation on the node processing apparatus.

The method disclosed in the foregoing embodiment of the present invention may be applied to the processor 61, or implemented by the processor 61. The processor 61 may be an integrated circuit chip, having a capability of processing a signal. In an implementation process, steps in the foregoing methods can be implemented by using a hardware integrated logical circuit in the processor 61, or by using instructions in a form of software. The processor 61 may be a general purpose processor, a DSP, or another programmable logic device, discrete gate or transistor logic device, discrete hardware component, or the like. The processor 61 can implement or perform the methods, steps, and logic block diagrams disclosed in the embodiments of the present invention. The general purpose processor may be a microprocessor or any conventional processor, or the like. The steps in the methods disclosed in the embodiments of the present invention may be directly implemented by a hardware decoding processor, or may be implemented by combining hardware and software modules in a decoding processor. The software module may be located in the storage medium. The storage medium is located in the memory 62. The processor 61 reads information in the memory 62, and completes the steps of the foregoing method in combination with hardware thereof.

In an exemplary embodiment, the electronic device may be implemented by using one or more application specific integrated circuit (ASIC), DSPs, programmable logic devices (PLD), complex programmable logic devices (CPLD), FPGAs, general processors, controllers, MCUs, or microprocessors, or another electronic component, to perform the foregoing methods.

An embodiment of the present invention further provides a computer-readable storage medium storing computer instructions, where the instructions are executed by a processor to implement the steps in the method according to the embodiments of the present invention. Specifically, the instructions are executed by the processor to implement the following steps: obtaining node data of a plurality of nodes; calculating an angle parameter between a first node and neighboring nodes and a distance parameter between the first node and the neighboring nodes, the first node being any of the plurality of nodes; determining an information amount of the first node based on the angle parameter and the distance parameter; and performing node deletion processing on the plurality of nodes based on the information amount.

As an implementation, the instructions are executed by the processor to implement the following steps: when a second node with an information amount less than a first preset threshold exists in the plurality of nodes, deleting the second node; and re-determining an information amount of a neighboring node of the second node.

As an implementation, the instructions are executed by the processor to implement the following steps: when a preset condition is met, deleting a second node with a minimum information amount in the plurality of nodes; and re-determining an information amount of a neighboring node of the second node.

As an implementation, the instructions are executed by the processor to implement the following steps: determining whether a node quantity of the plurality of nodes is greater than a second preset threshold; and when the node quantity of the plurality of nodes is greater than the second preset threshold, determining that the preset condition is met.

As an implementation, the instructions are executed by the processor to implement the following steps: determining whether the minimum information amount in the plurality of nodes is less than a third preset threshold; and when the minimum information amount in the plurality of nodes is less than the third preset threshold, determining that the preset condition is met.

As an implementation, the instructions are executed by the processor to implement the following steps: determining an included angle formed by the first node and both a previous neighboring node and a next neighboring node, and calculating an absolute value obtained after 180 degrees are subtracted from the included angle; and using the absolute value as the angle parameter between the first node and the neighboring nodes.

As an implementation, the instructions are executed by the processor to implement the following steps: determining a first distance between the first node and a previous neighboring node; determining a second distance between the first node and a next neighboring node; and determining the distance parameter between the first node and the neighboring nodes based on the first distance and the second distance.

As an implementation, the instructions are executed by the processor to implement the following steps: comparing the first distance and the second distance to determine a larger value in the first distance and the second distance; and determining the distance parameter based on the larger value.

As an implementation, the instructions are executed by the processor to implement the following steps: comparing the first distance and the second distance to determine a larger value in the first distance and the second distance; and determining the distance parameter based on the larger value.

As an implementation, the instructions are executed by the processor to implement the following steps: obtaining a product of the angle parameter and the distance parameter; and determining the information amount based on the product.

The computer-readable storage medium may be a memory, such as an FRAM, a ROM, a PROM, an EPROM, an EEPROM, a flash memory, a magnetic surface memory, a compact disc, or a CD-ROM; or may be any device including any one of the memories or any combination, such as a mobile phone, a computer, a tablet computer, or a personal digital assistant.

In the several embodiments provided in this application, it should be understood that the disclosed apparatus, device, and method may be implemented in other manners. The described device embodiments are merely exemplary. For example, the unit division is merely logical function division and may be other division during actual implementation. For example, multiple units or components may be merged or integrated into another system, or some features may be ignored or not performed. In addition, the displayed or discussed mutual couplings or direct couplings or communication connections between the components may be implemented through some interfaces, indirect couplings or communication connections between the devices or units, or electrical connections, mechanical connections, or connections in other forms.

The units described as separation parts may be or may not be physically separated. The part used as display unit may be or may not be a physical unit. That is, the units may be located in the same place, or may be distributed to many network units. Some or all of the units need to be selected according to actual requirements to implement the purpose of the solution of the embodiments.

In addition, in the embodiments of the present invention, the functional units may be all integrated into a processing unit. Alternatively, the units may be respectively used as a unit. Alternatively, two or more units may be integrated into a unit. The integrated unit may be implemented in a hardware form, or may be implemented in a form of adding hardware and a software functional unit.

Persons of ordinary skill in the art should understand that all or some of the steps of the method embodiment may be implemented by a program instructing relevant hardware. The program may be stored in a computer readable storage medium. When the program is run, the steps of the method embodiment are performed. The storage medium may be any medium that is capable of storing program code, such as a mobile storage device, a ROM, a RAM, a magnetic disk, and an optical disc.

Alternatively, in the embodiments of the present invention, if implemented in the form of software functional modules and sold or used as independent products, the integrated modules may be stored in a computer-readable storage medium. Based on such an understanding, the technical solutions of the embodiments of the present invention essentially, or the part contributing to the prior art may be implemented in a form of a software product. The computer software product is stored in a storage medium and includes several instructions for instructing a computer device (which may be a personal computer, a server, a network device, or the like) to perform all or some of the methods described in the embodiments of the present invention. The foregoing storage medium includes: any medium that can store program code, such as a mobile storage device, a ROM, a magnetic disk, or an optical disc.

The descriptions are only specific implementations of the embodiments of the present invention, but are not intended to limit the protection scope of the embodiments of the present invention. Any variation or replacement readily figured out by persons skilled in the art within the technical scope disclosed in the embodiments of the present invention shall fall within the protection scope of the embodiments of the present invention. Therefore, the protection scope of the embodiments of the present invention shall be subject to the protection scope of the claims.

**Claims**

1. A node processing method, comprising:

obtaining (101, 201, 301, 401) node data of a plurality of nodes including position information; **characterized by** calculating (102, 202, 302, 402), based on the node data, an angle parameter between a first node and neighboring nodes and a distance parameter between the first node and the neighboring nodes, the first node being any of the plurality of nodes; determining (103, 203, 303, 403) an information amount of the first node based on the angle parameter and the distance parameter; and performing (104) node deletion processing on the plurality of nodes based on the information amount; wherein the calculating (102, 202, 302, 402), based on the node data, an angle parameter between a first node and neighboring nodes comprises:

determining an included angle formed by the first node and both a previous neighboring node and a next neighboring node; calculating an absolute value obtained after 180 degrees are subtracted from the included angle; and using the absolute value as the angle parameter between the first node and the neighboring nodes; wherein the calculating (102, 202, 302, 402), based on the node data, a distance parameter between the first node and the neighboring nodes comprises:

determining a first distance between the first node and a previous neighboring node; determining a second distance between the first node and a next neighboring node; and determining the distance parameter between the first node and the neighboring nodes based on the first distance and the second distance.

2. The method according to claim 1, **characterized in that** the performing (104) node deletion processing on the plurality of nodes based on the information amount comprises:

deleting (204, 205) a second node with an information amount less than a first preset threshold in the plurality of nodes; and re-determining (205) an information amount of a neighboring node of the second node.

3. The method according to claim 1, **characterized in that** the performing (104) node deletion processing on the plurality of nodes based on the information amount comprises:

when a preset condition is met, deleting (305, 405) a second node with a minimum information amount in the plurality of nodes; and re-determining (305, 405) an information amount of a neighboring node of the second node.

4. The method according to claim 3, **characterized in that** the preset condition comprises any one or more of the following:

a node quantity of the plurality of nodes is greater than a second preset threshold (304); and the minimum information amount in the plurality of nodes is less than a third preset threshold (404).

5. The method according to any one of claims 1 to 4, **characterized in that** the determining the distance parameter between the first node and the neighboring nodes based on the first distance and the second distance comprises:

comparing the first distance and the second distance to determine a larger value in the first distance and the second distance; and determining the distance parameter based on the larger value.

6. The method according to any one of claims 1 to 5, **characterized in that** the determining the distance parameter between the first node and the neighboring nodes based on the first distance and the second distance comprises:

obtaining a sum of the first distance and the second distance; and determining the distance parameter based on the sum.

7. The method according to any one of claims 1 to 6, **characterized in that** the determining an information amount of the first node based on the angle parameter and the distance parameter comprises:

obtaining a product of the angle parameter and the distance parameter; and determining the information amount based on the product.

8. A node processing apparatus, comprising:

an obtaining unit (51) configured to obtain node data of a plurality of nodes including position information;

**characterized by**

a calculation processing unit (52) configured to calculate, based on the node data, an angle parameter between a first node and neighboring nodes and a distance parameter between the first node and the neighboring nodes based on the node data and determine an information amount of the first node based on the angle parameter and the distance parameter, the first node being any of the plurality of nodes; and a compression processing unit (53) configured to perform node deletion processing on the plurality of nodes based on the information amount; wherein the calculation processing unit (52) being configured to calculate, based on the node data, an angle parameter between a first node and neighboring nodes comprises:

to determine an included angle formed by the first node and both a previous neighboring node and a next neighboring node; to calculate an absolute value obtained after 180 degrees are subtracted from the included angle; and to use the absolute value as the angle parameter between the first node and the neighboring nodes; wherein the calculation processing unit (52) being configured to calculate, based on the node data, a distance parameter between the first node and the neighboring nodes comprises:

to determine a first distance between the first node and a previous neighboring node; to determine a second distance between the first node and a next neighboring node; and to determine the distance parameter between the first node and the neighboring nodes based on the first distance and the second distance.

9. A computer readable storage medium storing computer instructions, **characterized in that** the instructions are executed by a processor to implement the steps of the method according to any of claims 1 to 7.

10. An electronic device comprising a memory (62), a processor (61), and a computer program stored on the memory (62) and executable on the processor (61), **characterized in that** when executing the program, the processor (61) implements the steps of the method according to any of claims 1 to 7.

**Patentansprüche**

1. Verfahren zur Verarbeitung von Knoten, umfassend:

Erhalten (101, 201, 301, 401) von Knotendaten einer Vielzahl von Knoten einschließlich Positionsinformationen;
**dadurch gekennzeichnet, dass**
Berechnen (102, 202, 302, 402) eines Winkelparameters zwischen dem ersten Knoten und den benachbarten Knoten und eines Abstandsparameters zwischen dem ersten Knoten und den benachbarten Knoten basierend auf den Knotendaten, wobei der erste Knoten irgendeiner aus der Vielzahl von Knoten ist;
Bestimmen (103, 203, 303, 403) einer Informationsmenge des ersten Knotens basierend auf dem Winkelparameter und dem Abstandsparameter; und
Durchführen (104) der Knotenlöschverarbeitung an der Vielzahl von Knoten basierend auf der Informationsmenge;
wobei das Berechnen (102, 202, 302, 402) eines Winkelparameters zwischen dem ersten Knoten und den benachbarten Knoten basierend auf den Knotendaten umfasst:

Bestimmen eines eingeschlossenen Winkels, der von dem ersten Knoten und sowohl einem vorherigen als auch einem nächsten benachbarten Knoten gebildet wird;
Berechnen eines absoluten Wertes, der nach Abzug von 180 Grad von dem eingeschlossenen Winkel erhalten wird; und
Verwenden des absoluten Wertes als Winkelparameter zwischen dem ersten Knoten und den benachbarten Knoten;
wobei das Berechnen (102, 202, 302, 402) eines Abstandsparameters zwischen dem ersten Knoten und den benachbarten Knoten basierend auf den Knotendaten umfasst:

Bestimmen eines ersten Abstands zwischen dem ersten Knoten und einem vorherigen benachbarten Knoten;
Bestimmen eines zweiten Abstands zwischen dem ersten Knoten und einem nächsten benachbarten Knoten; und
Bestimmen des Abstandsparameters zwischen dem ersten Knoten und den benachbarten Knoten basierend auf dem ersten Abstand und dem zweiten Abstand.

2. Verfahren nach Anspruch 1, **dadurch gekennzeichnet, dass** das Durchführen (104) der Knotenlöschverarbeitung an der Vielzahl von Knoten basierend auf der Informationsmenge umfasst:

Löschen (204, 205) eines zweiten Knotens mit einer Informationsmenge, die kleiner als ein erster voreingestellter Schwellenwert ist, aus der Vielzahl von Knoten; und
Neubestimmen (205) einer Informationsmenge eines benachbarten Knotens des zweiten Knotens.

3. Verfahren nach Anspruch 1, **dadurch gekennzeichnet, dass** das Durchführen (104) der Knotenlöschverarbeitung an der Vielzahl von Knoten basierend auf der Informationsmenge umfasst:

Löschen (305, 405) eines zweiten Knotens mit einer minimalen Informationsmenge in der Vielzahl von Knoten, wenn eine voreingestellte Bedingung erfüllt ist; und
Neubestimmen (305, 405) einer Informationsmenge eines benachbarten Knotens des zweiten Knotens.

4. Verfahren nach Anspruch 3, **dadurch gekennzeichnet, dass** die voreingestellte Bedingung eines oder mehrere der folgenden Bedingungen umfasst:

eine Knotenmenge der Vielzahl von Knoten größer ist als ein zweiter voreingestellter Schwellenwert (304); und
die minimale Informationsmenge in der Vielzahl von Knoten kleiner ist als ein dritter voreingestellter Schwellenwert (404).

5. Verfahren nach einem der Ansprüche 1 bis 4, **dadurch gekennzeichnet, dass** das Bestimmen des Abstandsparameters zwischen dem ersten Knoten und den benachbarten Knoten basierend auf dem ersten Abstand und dem zweiten Abstand umfasst:

Vergleichen des ersten Abstands und des zweiten Abstands, um einen größeren Wert für den ersten Abstand und den zweiten Abstand zu bestimmen; und
Bestimmen des Abstandsparameters basierend auf dem größeren Wert.

6. Verfahren nach einem der Ansprüche 1 bis 5, **dadurch gekennzeichnet, dass** das Bestimmen des Abstandsparameters zwischen dem ersten Knoten und den benachbarten Knoten basierend auf dem ersten Abstand und dem zweiten Abstand umfasst:

Erhalten einer Summe des ersten und des zweiten Abstands; und
Bestimmen des Abstandsparameters basierend auf der Summe.

7. Verfahren nach einem der Ansprüche 1 bis 6, **dadurch gekennzeichnet, dass** das Bestimmen einer Informationsmenge des ersten Knotens basierend auf dem Winkelparameter und dem Abstandsparameter umfasst:

Erhalten eines Produkts aus dem Winkelparameter und dem Abstandsparameter; und
Bestimmen der Informationsmenge basierend auf dem Produkt.

8. Vorrichtung zur Verarbeitung von Knoten, umfassend:

eine Erhaltungseinheit (51) so konfiguriert ist, dass sie Knotendaten einer Vielzahl von Knoten einschließlich Positionsinformationen erhält;
**dadurch gekennzeichnet, dass**
eine Berechnungsverarbeitungseinheit (52) so konfiguriert ist, dass sie basierend auf den Knotendaten einen Winkelparameter zwischen einem ersten Knoten und den benachbarten Knoten und einen Abstandsparameter zwischen dem ersten Knoten und den benachbarten Knoten berechnet und basierend auf dem Winkelparameter und dem Abstandsparameter eine Informationsmenge des ersten Knotens bestimmt, wobei der erste Knoten irgendeiner aus der Vielzahl von Knoten ist; und
eine Komprimierungsverarbeitungseinheit (53) so konfiguriert ist, dass sie basierend auf der Informationsmenge eine Knotenlöschverarbeitung an der Vielzahl von Knoten durchführt;
wobei die Berechnungsverarbeitungseinheit (52) so konfiguriert ist, dass sie basierend auf den Knotendaten einen Winkelparameter zwischen einem ersten Knoten und den benachbarten Knoten berechnet, umfassend:

einen eingeschlossenen Winkel zu bestimmen, der von dem ersten Knoten und sowohl einem vorherigen als auch einem nächsten benachbarten Knoten gebildet wird;
einen absoluten Wert zu berechnen, der nach Abzug von 180 Grad von dem eingeschlossenen Winkel erhalten wird; und
den absoluten Wert als Winkelparameter zwischen dem ersten Knoten und den benachbarten Knoten zu verwenden;
wobei die Berechnungsverarbeitungseinheit (52) so konfiguriert ist, dass sie basierend auf den Knotendaten einen Abstandsparameter zwischen dem ersten Knoten und den benachbarten Knoten berechnet, umfassend:

einen ersten Abstand zwischen dem ersten Knoten und einem vorherigen benachbarten Knoten zu bestimmen; einen zweiten Abstand zwischen dem ersten Knoten und einem nächsten benachbarten Knoten zu bestimmen; und um den Abstandsparameter zwischen dem ersten Knoten und den benachbarten Knoten basierend auf dem ersten Abstand und dem zweiten Abstand zu bestimmen.

9. Computerlesbares Speichermedium, das Computerbefehle speichert, **dadurch gekennzeichnet, dass** die Befehle von einem Prozessor ausgeführt werden, um die Schritte des Verfahrens nach einem der Ansprüche 1 bis 7 zu implementieren.

10. Elektronische Vorrichtung mit einem Speicher (62), einem Prozessor (61) und einem Computerprogramm, das in dem Speicher (62) gespeichert und auf dem Prozessor (61) ausführbar ist, **dadurch gekennzeichnet, dass** der Prozessor (61) bei der Ausführung des Programms die Schritte des Verfahrens nach einem der Ansprüche 1 bis 7 implementiert.

**Revendications**

1. Procédé de traitement de nœuds, comprenant :

  acquérir (101, 201, 301, 401) des données de nœud d'une pluralité de nœuds comprenant des informations de position ;
  **caractérisé en ce que**,
  calculer (102, 202, 302, 402), sur la base des données de nœud, un paramètre d'angle entre un premier nœud et des nœuds adjacents et un paramètre de distance entre le premier nœud et les nœuds adjacents, le premier nœud étant l'un quelconque de la pluralité de nœuds;
  déterminer (103, 203, 303, 403) une quantité d'informations du premier nœud sur la base du paramètre d'angle et du paramètre de distance ; et
  effectuer (104) un traitement de suppression de nœud sur la pluralité de nœuds sur la base de la quantité d'informations ;
  dans lequel l'étape de calculer (102, 202, 302, 402), sur la base des données de nœud, un paramètre d'angle entre un premier nœud et des nœuds adjacents comprend :

    déterminer un angle inclus formé par le premier nœud et à la fois un nœud adjacent précédent et un nœud adjacent suivant ;
    calculer une valeur absolue en soustrayant 180 degrés de l'angle inclus ; et
    utiliser la valeur absolue comme paramètre d'angle entre le premier nœud et les nœuds adjacents ;
dans lequel l'étape de calculer (102, 202, 302, 402), sur la base des données de nœud, un paramètre de distance entre le premier nœud et les nœuds adjacents comprend :

    déterminer une première distance entre le premier nœud et un nœud adjacent précédent ;
    déterminer une deuxième distance entre le premier nœud et un nœud adjacent suivant ; et
    déterminer le paramètre de distance entre le premier nœud et les nœuds adjacents sur la base de la première distance et de la deuxième distance.

2. Procédé selon la revendication 1, **caractérisé en ce que**, l'étape d'effectuer (104) un traitement de suppression de nœud sur la pluralité de nœuds sur la base de la quantité d'informations comprend :

    supprimer (204, 205) un deuxième nœud avec une quantité d'informations inférieure à un premier seuil prédéfini dans la pluralité de nœuds; et
    re-déterminer (205) une quantité d'informations d'un nœud adjacent du deuxième nœud.

3. Procédé selon la revendication 1, **caractérisé en ce que**, l'étape d'effectuer (104) un traitement de suppression de nœud sur la pluralité de nœuds sur la base de la quantité d'informations comprend :

    lorsqu'une condition prédéfinie est satisfaite, supprimer (305, 405) un deuxième nœud avec une quantité minimum d'informations dans la pluralité de nœuds; et
    re-déterminer (305, 405) une quantité d'informations d'un nœud adjacent du deuxième nœud.

4. Procédé selon la revendication 3, **caractérisé en ce que** la condition prédéfinie comprend l'une ou plusieurs des conditions suivantes :

    une quantité de nœuds de la pluralité de nœuds est supérieure à un deuxième seuil prédéfini (304) ; et
    la quantité minimum d'informations dans la pluralité de nœuds est inférieure à un troisième seuil prédéfini (404).

5. Procédé selon l'une quelconque des revendications 1 à 4, **caractérisé en ce que** l'étape de déterminer le paramètre de distance entre le premier nœud et les nœuds adjacents sur la base de la première distance et de la deuxième distance comprend :

> comparer la première distance et la deuxième distance pour déterminer une valeur supérieure parmi la première distance et la deuxième distance ; et
> déterminer le paramètre de distance sur la base de la valeur supérieure.

**6.** Procédé selon l'une quelconque des revendications 1 à 5, **caractérisé en ce que** l'étape de déterminer le paramètre de distance entre le premier nœud et les nœuds adjacents sur la base de la première distance et de la deuxième distance comprend :

> obtenir une somme de la première distance et de la deuxième distance ; et
> déterminer le paramètre de distance sur la base de la somme.

**7.** Procédé selon l'une quelconque des revendications 1 à 6, **caractérisé en ce que** l'étape de déterminer une quantité d'informations du premier nœud sur la base du paramètre d'angle et du paramètre de distance comprend :

> obtenir un produit du paramètre d'angle et du paramètre de distance ; et
> déterminer la quantité d'informations sur la base du produit.

**8.** Dispositif de traitement de nœuds, comprenant :

> une unité d'acquisition (51), configurée pour acquérir des données de nœud d'une pluralité de nœuds comprenant des informations de position ;
> **caractérisé en ce que**,
> une unité de traitement de calcul (52), configurée pour calculer, sur la base des données de nœud, un paramètre d'angle entre un premier nœud et des nœuds adjacents et un paramètre de distance entre le premier nœud et les nœuds adjacents sur la base des données de nœud, et pour déterminer une quantité d'informations du premier nœud sur la base du paramètre d'angle et du paramètre de distance ; le premier nœud étant l'un quelconque de la pluralité de nœuds; et
> une unité de traitement de compression (53), configurée pour effectuer un traitement de suppression de nœud sur la pluralité de nœuds sur la base de la quantité d'informations ;
> dans lequel l'unité de traitement de calcul (52) configurée pour calculer, sur la base des données de nœud, un paramètre d'angle entre un premier nœud et des nœuds adjacents comprend :

> déterminer un angle inclus formé par le premier nœud et à la fois un nœud adjacent précédent et un nœud adjacent suivant ;
> calculer une valeur absolue en soustrayant 180 degrés de l'angle inclus ; et
> utiliser la valeur absolue comme paramètre d'angle entre le premier nœud et les nœuds adjacents ;
> dans lequel l'unité de traitement de calcul (52) configurée pour calculer, sur la base des données de nœud, un paramètre de distance entre le premier nœud et les nœuds adjacents comprend :

> déterminer une première distance entre le premier nœud et un nœud adjacent précédent ;
> déterminer une deuxième distance entre le premier nœud et un nœud adjacent suivant ; et
> déterminer le paramètre de distance entre le premier nœud et les nœuds adjacents sur la base de la première distance et de la deuxième distance.

**9.** Support de stockage lisible par ordinateur stockant des instructions informatiques, **caractérisé en ce que** les instructions sont exécutées par un processeur pour mettre en œuvre les étapes du procédé selon l'une quelconque des revendications 1 à 7.

**10.** Dispositif électronique comprenant une mémoire (62), un processeur (61) et un programme informatique stocké sur la mémoire (62) et exécutable sur le processeur (61), **caractérisé en ce qu'**une fois le programme exécuté, le processeur (61) met en œuvre les étapes du procédé selon l'une quelconque des revendications 1 à 7.

101
┌─────────────────────────────────────────────────────────┐
│ Obtain node data of a plurality of nodes │
└─────────────────────────────────────────────────────────┘

102
┌─────────────────────────────────────────────────────────┐
│ Calculate an angle parameter between a first node and neighboring │
│ nodes and a distance parameter between the first node and the │
│ neighboring nodes │
└─────────────────────────────────────────────────────────┘

103
┌─────────────────────────────────────────────────────────┐
│ Determine an information amount of the first node based on the angle │
│ parameter and the distance parameter │
└─────────────────────────────────────────────────────────┘

104
┌─────────────────────────────────────────────────────────┐
│ Perform node deletion processing based on the information amount │
└─────────────────────────────────────────────────────────┘

FIG. 1

FIG. 2

301

Obtain node data of a plurality of nodes

302

Calculate an angle parameter between a first node and neighboring nodes and a distance parameter between the first node and the neighboring nodes

303

Determine an information amount of the first node based on the angle parameter and the distance parameter

304

Whether a node quantity of the plurality of nodes is greater than a second preset threshold?

No

Yes

305

Delete a second node with a minimum information amount in the plurality of nodes and re-determine an information amount of a neighboring node of the second node

306

End

FIG. 3

Obtainnode data of a plurality of nodes — 401

Calculate an angle parameter between a first node and neighboring nodes and a distance parameter between the first node and the neighboring nodes — 402

Determine an information amount of the first node based on the angle parameter and the distance parameter — 403

Whether a minimum information amount in the plurality of nodes is less than a third preset threshold? — 404

No

Yes

Delete a second node corresponding to the minimum information amount and re-determine an information amount of a neighboring node of the second node — 405

End — 406

FIG. 4

FIG. 5a

FIG. 5b

FIG. 5c

FIG. 5d

FIG. 5e

FIG. 5f

Obtaining unit
51

Calculation
processing unit
52

Compression
processing unit
53

FIG. 6

61

63
Processor
64

External
communications
interface

62

Memory

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106355927 A
- CN 103500516 B